# EUROPÄISCHE PATENTSCHRIFT

(11) **EP 1 839 932 B1**
(45) Veröffentlichungstag und Bekanntmachung des Hinweises auf die Patenterteilung: **22.12.2010**
(21) Anmeldenummer: 07102325.3
(22) Anmeldetag: 14.02.2007
(51) Int. Cl.: B60N 2/02

(54) **Systeme und Verfahren zur Auswahl und Verstellung sitzbezogener Funktionen in einem Kraftfahrzeug**
Systems and method for selection and adjustment of seat related functions in a motor vehicle
Systèmes et procédé destinés à la sélection et au réglage de fonctions relatives au siège dans un véhicule automobile

(30) Priorität: 27.03.2006 DE 102006013968
(43) Veröffentlichungstag der Anmeldung: 03.10.2007
(73) Patentinhaber: Ford Global Technologies, LLC, Dearborn, MI 48126 (US)
(72) Erfinder: Lem, Jeroen, 6212 BE, Maastricht (NL); Siebertz, Karl, 52457, Aldenhoven (DE)
(74) Vertreter: Dörfler, Thomas

(56) Entgegenhaltungen:
- EP-A- 1 389 559
- EP-A- 1 564 066
- WO-A-01/60650
- DE-A1- 10 063 478
- US-B1- 6 203 105

## Beschreibung

Die Erfindung betrifft Systeme und ein Verfahren zur Auswahl und Verstellung sitzbezogener Funktionen in einem Kraftfahrzeug, insbesondere Pkw, für einen Fahrzeugsitz mit einem Rahmen, einer Auflage und mehreren Formänderungselementen zwischen Rahmen und Auflage, wobei ein 4-Wegeschalter für die Auswahl und Verstellung der sitzbezogenen Funktionen vorgesehen ist.

Der Entwurf und die Konstruktion von Fahrzeugsitzen beinhaltet immer einen Kompromiss zwischen verschiedenen Faktoren, wie Gewicht, Größe, Steifigkeit in einigen Bereichen und Flexibilität in anderen Bereichen, Haltbarkeit, Sitzkomfort usw.

Diese Faktoren müssen kombiniert werden, um zu einem Sitz zu gelangen, der ein akzeptables Verhalten in allen Fahrsituationen und unabhängig vom Insassen zeigt.

Ein wichtiges Problem beim Sitzkomfort und Fahrgefühl ist die Übertragung von Vibrationen oder Schwingungen des Fahrzeugs über den Sitz auf die Insassen während der Fahrt. Hierbei besteht ein Konflikt zwischen guter Schwingungs- bzw. Vibrationsdämpfung durch den Sitz und gutem Kontakt zur Fahrbahn bzw. gutem Fahrgefühl. Hierbei spielt auch die Anatomie der Insassen eine nicht unerhebliche Rolle.

Wichtigster Faktor, der die Übertragung der Schwingungen vom Sitz auf die Insassen bestimmt, ist die "Durchlässigkeit" (transmissibility) des Sitzes. Die Durchlässigkeit wird als Verhältnis der Eingangs-Vibrationen (am Fahrzeug bzw. Sitzrahmen) zu den Ausgangs-Vibrationen an der Sitzfläche bzw. Sitzkissen definiert. Bei der Entwicklung wird die Durchlässigkeit der Sitze unter verschiedenen Fahrsituationen und Belastungen und bei unterschiedlichen Insassen optimiert, wobei Kompromisse eingegangen werden müssen, damit der Sitz ein akzeptables Verhalten in allen Fahrsituationen und unabhängig von den Insassen zeigt. Von Interesse ist es daher die Durchlässigkeit zu minimieren.

Viele passive, mechanische Systeme zur Schwingungsdämpfung bei Sitzen sind bekannt. Die passiven Dämpfungselemente fungieren dabei als Filter zwischen Sitz und Fahrzeug, um hochfrequente Schwingungen zu reduzieren. Verwendet werden einerseits so genannte Unterfederungen, die eine sehr gute Schwingungsdämpfung mit hoher Flächenelastizität aufweisen. Nachteilig sind jedoch Druckspitzen im Bereich der Sitzbeinhöcker und Überschwinger bei holpriger Fahrbahn. Ebenfalls bekannt ist es, in den Sitzrahmen eine Blechpfanne einzulegen, auf der ein Schaumblock ruht. Der Schaumblock besitzt eine höhere Punktelastizität als die zuerst genannte Konstruktion, dämpft aber die hochfrequenten Schwingungen ab 5 Hz schlechter als die Unterfedern.

Diese traditionellen Systeme stellen also insoweit immer einen großen Kompromiss dar und sind insbesondere nur für einen begrenzten Teil der Bevölkerung optimiert. Zudem können sie nicht eingestellt oder während der Fahrt verändert werden.

Sitze sollen ferner die Ermüdung der Insassen, insbesondere des Fahrers, der eine definierte Position zu den Bedienungselementen des Fahrzeugs bei der Fahrt einhalten muß und so ohne Lageänderung schnell z. B. durch Muskelverspannung ermüdet, möglichst vermeiden.

Daher werden auch Systeme verwendet, die einstellbare Formänderungselemente beinhalten. Die Formänderungselemente erlauben durch Veränderung ihrer Gestalt z. B. die Sitzkontur an den Insassen anzupassen oder eine Massagefunktion einzustellen. Als Formänderungselemente sind z. B. Luftkissen zu verstehen, die mittels des Beaufschlagungsdrucks eingestellt werden können. Andere Technologien, wie Formgedächnislegierungen, elektrische Stellmotoren usw. sind ebenfalls einsetzbar.

So offenbart die gattungsgemäße DE 100 63 478 A1 einen Sitz für Kraftfahrzeuge, der unter der Verwendung von mehreren Luftkissen die zeitliche Veränderung der Sitzkontur zur Massage erlaubt. Hierzu werden die Luftkissen zeitlich versetzt mit Druckluft beaufschlagt. Eine Schwingungsdämpfung bzw. Verminderung der Durchlässigkeit ist mit diesem System nicht möglich bzw. nicht vorgesehen. Zudem liegen die Luftkissen direkt unter dem Sitzbein, also in der Region, die bereits mit den höchsten Sitzdrücken beaufschlagt wird. Daher werden weitere Druckspitzen sofort als unangenehm empfunden. Zudem verwendet das Systeme lediglich zwei Luftkissen unterhalb des Sitzkissens bzw. der Sitzfläche, sodaß nur eine Pendelbewegung erzeugt werden kann, die lediglich eine Beckenkippung von links nach rechts erlaubt. Eine solche Beckenkippung ist jedoch aus anatomischen Gesichtspunkten unerwünscht.

Aus der US 6,203,105 B1 ist ein System bekannt, das ähnlich dem in der DE 100 63 478 A1 beschriebenen System einstellbare Luftkissen in der Sitzlehne und der Kopfstütze verwendet, um zusätzlich zur Konturverstellung und Massage im Falle eines Aufpralls des Fahrzeugs den Kontakt der Insassen mit den steifen Bestandteilen der Sitze zu verhindern. Hierzu ist das System mit einer Vielzahl von Sensoren ausgerüstet, welche einer entsprechenden Steuerung die gezielte Beaufschlagung der Luftkissen je nach Fahrsituation erlauben. Auch mit diesem System ist jedoch eine gezielte Schwingungsdämpfung bzw. Durchlässigkeitsverminderung, insbesondere der Sitzfläche nicht vorgesehen. Zudem ist auch eine aktive Vermeidung der Ermüdung des Fahrers mit dem System nicht möglich.

Eine Lösung für diese Probleme ist in der eigenen EP 1 564 066 A1 beschrieben. Insbesondere bei der dort in Figur 3 beschriebenen bevorzugten Ausführungsform eines Sitzes sind eine Vielzahl von Formänderungselementen vorgesehen.

Diese Vielzahl von Formänderungselementen bedingt, daß ein solcher Sitz ebenfalls eine Vielzahl von sitzbezogener Funktionen aufweist, wie eine Verstellung der Sitzkontur, eine Verstellung der Lordosenstütze, eine Einstellung einer Lordosenstützenmassage oder einer Einstellung einer zyklischen Bewegung des Sitzkissens.

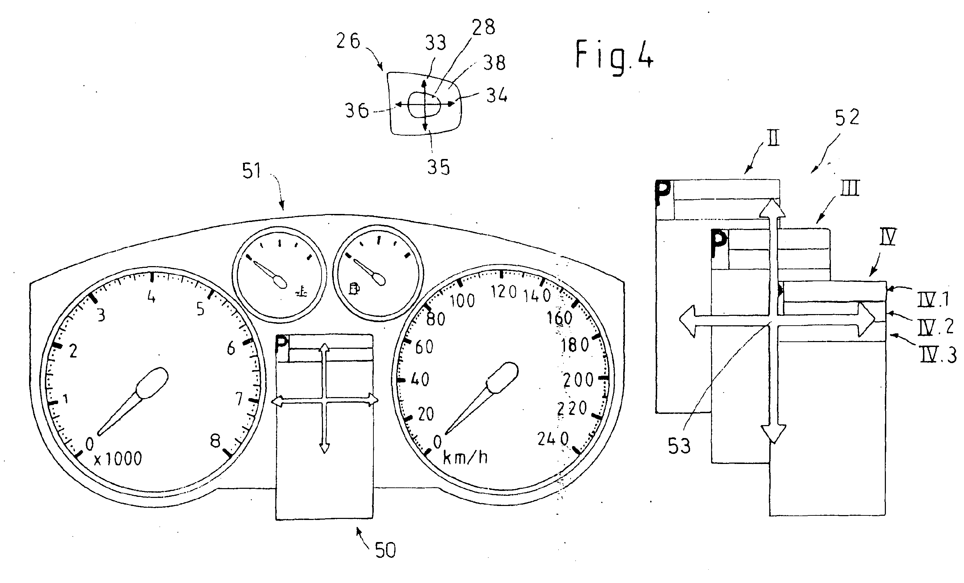

Aus der EP 1 389 559 A2 ist ein Kraftfahrzeugsystem, eine Steuerungsvorrichtung, eine Betätigungsvorrichtung und ein Verfahren zur Steuerung einer Lordosenverstelleinrichtung eines Kraftfahrzeugsitzes bekannt, wobei dort über ein kreuzförmiges Bedienelement B (vgl. Fig. 4A und 4B) lediglich die Verstellung der Lordosenstütze selbst, nicht aber weiterer sitzbezogener Funktionen möglich ist.

Diese Vielzahl sitzbezogener Funktionen ist jedoch den momentan bekannten Systemen und Verfahren schwierig und wenig intuitiv zu bedienen beziehungsweise auszuwählen und zu verstellen, da diese für jede Funktion üblicherweise einen separaten Schalter vorsehen.

Aufgabe der vorliegenden Erfindung ist es daher, ein System und ein Verfahren bereitzustellen, die die einfache und intuitive Auswahl und Verstellung einer Vielzahl sitzbezogener Funktionen, insbesondere des aus der EP 1 564 066 A1 beschriebenen Sitzes, ermöglichen.

Diese Aufgabe wird durch die in Anspruch 1 bzw. 2 wiedergegebenen Systeme und das in Anspruch 10 wiedergegebene Verfahren gelöst.

Dadurch, daß ein 4-Wegeschalter für die Auswahl und Verstellung der sitzbezogenen Funktionen, insbesondere durch Auswahl und Verstellung der Formänderungselemente vorgesehen ist, ist es möglich, die Auswahl und Verstellung der Vielzahl sitzbezogener Funktionen mit lediglich einem Schalter in einfacher und intuitiver Weise durchzuführen.

Vorteilhafterweise weist der 4-Wegeschalter zwei im wesentlichen Senkrecht zu einander angeordnete Betätigungstastenpaare auf. Der 4-Wegeschalter ist zusätzlich um eine senkrecht zur Ebene der Betätigungstasten stehende Achse drehbar ausgestaltet, um eine Umschaltung zwischen verschiedenen Funktionsgruppen zur Verfügung zu stellen.

Alternativ weist der 4-Wegeschalter zwei im wesentlichen Senkrecht zu einander stehende Betätigungsrichtungen auf. Der 4-Wegeschalter ist ebenfalls zusätzlich um eine senkrecht zur Betätigungsrichtung stehende Achse drehbar ausgestaltet, um eine Umschaltung zwischen verschiedenen Funktionsgruppen zur Verfügung zu stellen.

Weiterhin kann der 4-Wegeschalter entlang der Drehachse als Druckschalter ausgestaltet sein, um weitere Funktionalitäten zur Verfügung zu stellen bzw. ausführen zu können.

In einer bevorzugten Ausführungsform wird als 4-Wegeschalter eine Bedienungsschalteranordnung verwendet, die in ein Lenkrad integriert ist, mit vier Schaltelementen, die kreuzförmig angeordnet sind, und mit einem weiteren Schaltelement, das relativ zu den vier Schaltelementen zentral angeordnet ist, wobei die vier Schaltelemente kreuzförmig um das zentrale weitere Schaltelement angeordnet sind, wobei die Schaltelemente derart ausgeführt sind, daß sie separat von einander betätigbar sind und daß eine das weitere Schaltelement, insbesondere ringförmig, umgebende gemeinsame Wipptaste vorgesehen ist, über die die vier Schaltelemente separat betätigbar sind.

Dabei kann das weitere Schaltelement unabhängig von den vier Schaltelementen über eine separate Taste betätigbar ausgeführt sein.

Der 4-Wegeschalter kann aber auch alternativ in der Tür oder dem Sitz angeordnet sein.

Die durch ein oder mehrere Schaltelemente ausgeführten Funktionen können mit den jeweiligen Schaltelementen fest zugeordnet oder die ihnen zugewiesenen Funktionen frei programmierbar sein. Auch können ein oder mehrere Schaltelemente derart ausgeführt sein, daß die ihnen zugewiesenen Funktionen sich kontextabhängig ändern.

In einer weiteren bevorzugten Ausführungsform ist ein Mittel zur optischen und/oder akustischen und/oder taktile Anzeige der ausgewählten Funktion und deren Verstellung vorgesehen. Dies erlaubt eine Anzeige und/oder Bestätigung der ausgewählten Funktion und/oder der Verstellung der ausgewählten Funktion.

Günstigerweise ist das Mittel zur optischen Anzeige eine Anzeige eines Navigationssystems, eines Bordcomputersystems, eines Fahrerinformationssystems oder eines dedizierten Anzeige. Die optische Anzeige kann dabei eine grafische Anzeige und/oder eine Textanzeige sein.

Des Weiteren kann das Mittel zur akustischen Anzeige ein Lautsprecher für eine Stimmenwiedergabe sein.

Auch kann das Mittel zur taktilen Anzeige eine pulsierende Änderung des entsprechenden Formänderungselements sein.

Als 4-Wegeschalter und/oder Anzeige lassen sich auch moderne PDA's (Personal Digital Assistant) verwenden, die drahtgebunden oder drahtlos (WLAN, IR, Bluetooth etc.) mit einer geeigneten Schnittstelle einer Steuerung kommunizieren, um eine auf ihnen ausgewählte Funktion und/oder Verstellung einer ausgewählten Funktion weiterzugeben.

Als Anzeige dient dann das Display des PDA und als Schalter entweder die üblicherweise vorhandenen Navigationstaste oder eine entsprechende Anzeige auf einem Touch-Display.

Die Erfindung betrifft auch ein entsprechendes Verfahren nach Anspruch 10.

Hierbei erfolgt die Auswahl und Verstellung der sitzbezogenen Funktionen über einen 4-Wegeschalter, insbesondere durch Auswahl und Verstellung der Formänderungselemente.

Vorteilhafterweise erfolgt über eine der jeweils im wesentlichen senkrecht zueinander angeordneten Betätigungstastenpaare oder Betätigungsrichtungen einer Auswahl der zu verstellenden Funktion und über die entsprechend andere die Verstellung der Funktionen.

So können z. B. die etwa in horizontaler Richtung angeordneten Tasten oder Ähnliches eine Auswahl der zu verstellenden Funktion durch zyklisches Durchlaufen einer fest vorgegebenen Reihenfolge der Formänderungselemente ermöglichen und die etwa in vertikaler Richtung angeordneten Tasten oder Ähnliches eine Verstellung der Größe, des Drucks, der Position usw. erlauben.

Eine besonders einfache und intuitive Bedienung ist dadurch möglich, daß eine Umschaltung zwischen verschiedenen Funktionsgruppen über eine Drehung des 4-Wegeschalters um eine senkrecht zur Ebene der Betätigungstasten oder - richtungen stehende Achse erfolgt.

Durch die Drehung des 4-Wegeschalters kann eine Umschaltung zwischen mindestens zwei Funktionsgruppen erlaubt sein, um die hierarchische Ordnung des Benutzermenues mit einem Schalter zu ermöglichen. Die Funktionsgruppen können verschiedene Betriebszustände des Systems darstellen, die sich gegenseitig ausschließen, weil sie systembedingt nicht gleichzeitig verfügbar sind. Dies gilt zum Beispiel für Konturverstellung und Massagemodus.

So kann z. B. eine Auswahl einer Funktion auch das An- und Abschalten einer Massagefunktion oder einer zyklischen Bewegung Sitzkissens bzw. Änderung der Formänderungselemente ermöglichen.

Zusätzlich kann eine optische und/oder akustische und/oder taktile Anzeige der ausgewählten Funktion und deren Verstellungsmöglichkeiten und/oder deren Verstellung erfolgen, so daß die Bedienerführung vereinfacht wird. Somit erhält der Bediener eine Rückmeldung über die ausgewählte Funktion und/oder deren Verstellung.

Die Rückmeldung kann in optischer Form als Piktogramm auf einer grafischen Anzeige oder als Liste in Textform auf einer Textanzeige erfolgen. Wenn die Rückmeldung akustisch erfolgt, kann dies als Sprache über einen Lautsprecher vorgenommen werden. Erfolgt die Rückmeldung in taktiler Form, so kann das jeweilige Formänderungselement seine Gestalt pulsierend oder vibrierend ändern, so daß der Benutzer sofort merkt, welches der vielen Formänderungselemente er ausgewählt hat.

Das oben angegebene System ist besonders zur Durchführung dieses Verfahrens geeignet.

Weitere Merkmale, Einzelheiten und Vorteile der Erfindung ergeben sich aus den Unteransprüchen und der Zeichnung. Es zeigen schematisch:
- Fig. 1: eine perspektivische, transparente Ansicht eines Sitzes;
- Fig. 2: eine Draufsicht auf ein Lenkrad eines PKW mit zwei 4-Wegeschaltern;
- Fig. 3A: eine alternative Ausführungsform eines 4-Wegeschalters in schematischer Form;
- Fig. 3B: die alternative Ausführungsform des 4-Wegeschalters aus Fig. 3A in perspektivischer Ansicht und
- Fig. 4: die Funktionsweise eines 4-Wegeschalters aus Fig. 2 oder 3.

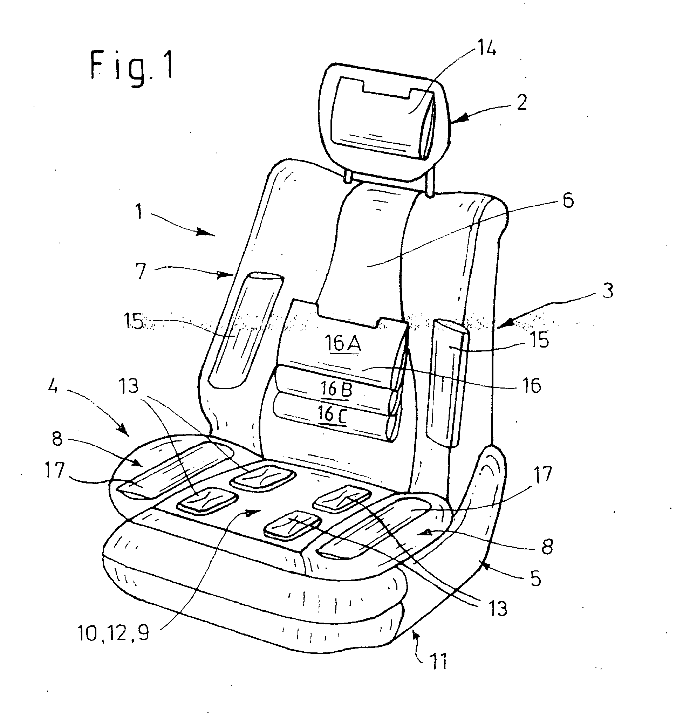

Fig. 1 zeigt schematisch einen als Ganzes mit 1 bezeichneten erfindungsgemäßen Sitz in einer schrägen Perspektive, wobei die Transparenz einen Blick ins Innere des Sitzes ermöglicht. Der Sitz 1 umfaßt eine Kopfstütze 2, die oben an einer Rückenlehne 3 angesetzt ist, die wiederum über ein verstellbares Scharnier 5 mit dem eigentlichen Sitz 4 gekoppelt ist. Der Sitz 1 wird dabei von einem Rahmen 11 aus Stahlblech getragen, der unter der eigentlichen Sitzfläche angeordnet und mit dem Fahrzeug verbunden ist.

Die Rückenlehne 3 weist eine im Längsschnitt etwa S-förmige, anatomisch geformte Auflage 6 für den Rücken des Insassen auf, die an den Seiten mit vorstehenden Rippen 7 begrenzt ist, die dem Insassen seitlich Halt geben.

Der eigentliche Sitz 4 weist ebenfalls eine Auflage 9 auf, die die eigentliche Sitzfläche definiert. Auch hier sind an den Seiten vorstehenden Rippen 8 vorgesehen, die dem Insassen, insbesondere in Kurven seitlich Halt geben.

Die Auflage 9 wird von einem Schaumblock 10 bestehend aus einem geeigneten Natur- und/oder Kunststoff gebildet, der ggf. mit einem geeigneten Material wie Leder bezogen ist. Die Auflage muß die üblichen und bekannten Eigenschaften, wie Federung, Dämpfung, Feuchtigkeitstransport usw. aufweisen. Ferner ist es möglich Heiz- und/oder Kühlvorrichtungen in der Auflage vorzusehen.

Unterhalb des Schaumblocks 10 ist eine Stützplatte 12 aus steifem Material vorgesehen. Die Stützplatte 12 ist dabei unter dem hinteren Bereich der Sitzfläche angeordnet, wo üblicherweise das Gesäß des Insassen aufliegt. Aus Gründen der Übersichtlichkeit ist die Stützplatte 12 in Fig. 1 aber nicht gezeigt bzw. durchsichtig dargestellt.

Ein wesentlichstes Merkmal des Sitzes nach Figur 1 ist das Vorhandensein von vier Luftkissen 13 unter dem eigentlichen Sitz 9 zwischen der Stützplatte 12 und dem Rahmen 11. Die Luftkissen sind dabei derart angeordnet, daß sie unter den Ecken der etwa rechteckigen Sitzfläche liegen.

Die vier voneinander unabhängig steuerbaren und beaufschlagbaren Luftkissen 13 unter der Stützplatte 12 ermöglichen neben der vertikalen Positionierung ein Kippen der Stützplatte 12 um zwei parallel zur Ebene der Sitzfläche und senkrecht zueinander verlaufenden Achsen. Somit kann eine Beckenkippung in Richtung von vorne nach hinten und umgekehrt erzeugt werden, die entlastend ist und z. B. bei Wirbelsäulengymnastik bevorzugt verwendet wird. Zur Vermeidung von Rückenschmerzen kommt es gerade auf diese Beckenkippung an. Diese Bewegung kann mit einer Kippbewegung von links nach rechts gekoppelt werden, so daß eine besonders gute Vermeidung der Ermüdung durch das durch die Beckenbewegung bedingte abwechselnde zyklische An- und Entspannen der Muskulatur erreicht wird.

Der Hub der einzelnen Luftkissen liegt in einer Größenordnung zwischen 5 mm und 30 mm, wobei der größere Hub lediglich für die Höhenverstellung verwendet wird.

Über entsprechende Software ist es möglich, geeignete Druckverläufe zu programmieren, vorzugeben und manuell oder automatisch auszuwählen. Näheres hierzu wird weiter unten folgen.

Ein vorteilhafter Steuerungszyklus der Luftkissen umfaßt einem U-förmigen Verlauf der Druckwelle bzw. der Beaufschlagung der Luftkissen 13. Der Zyklus verläuft dabei z. B. von vorne nach hinten und links nach rechts, also etwa von VL nach HL nach HR nach VR nach HR nach HL nach VL (V=vorne, H=hinten, R=rechts, L=links) und dauert ca. 1 min.

Unterhalb der Stützplatte 12 und oberhalb des Rahmens 11, also zwischen Stützplatte 12 und Rahmen 11 liegen also die vier Luftkissen 13, welche über eine nicht dargestellte Steuerung, Ventile und Kompressor mittels des beaufschlagten Luftdrucks die Einstellung und Verbesserung der Dämpfung des Sitzes auch während der Fahrt erlauben. Die Steuerung kann nach Auswertung von von Sensoren stammenden Daten über die Fahrsituation und den Insassen den Luftdruck im einzelnen Luftkissen 13 automatisch regeln.

Zusätzlich weist der Sitz 1 in den Rippen 7 und 8, der Auflage 6 und der Kopfstütze 2 weitere Luftkissen 15, 17, 16 und 14 auf, die zur Massage und Konturanpassung dienen. Sie sind ebenfalls über die bereits erwähnte Steuerung regel- und/oder bedienbar. Ferner können sie im Falle eines Aufpralls des Fahrzeugs aufgeblasen werden und als zusätzlicher Prallschutz dienen, um einen Kontakt des Insassen mit dem Metallrahmen 11 des Sitzes zu verhindern.

Das oder die Luftkissen 14 in der Kopfstütze 2 können im Fülldruck verändert werden, um dem Insassen eine angenehme Kopfauflagefläche bereitzustellen.

Die seitlichen Luftkissen 15 und 17 können im Fülldruck verändert werden, um die Breite des Sitzes bzw. den seitlichen Halt im Sitzbereich und Rückenbereich je nach Wunsch einzustellen. Zusätzlich ist eine Funktion vorgesehen, bei der die Luftkissen 15 und 17 einer Seite des Sitzes, nämlich der Ausstiegsseite, zum Erleichtern des Ein- und Ausstiegs vollständig entleert werden können. Vorteilhafterweise erfolgt dies durch eine Öffnung der entsprechenden Tür.

Die Luftkissen 16 im Lordosenbereich dienen als Lordosenstütze und umfassen ein oberes, ein mittleres und ein unteres Element 16A, 16B und 16C. Diese können sowohl im Fülldruck, als auch in der Position und Form eingestellt werden, um eine dem Insassen angenehme Lordosenstütze zu bieten.

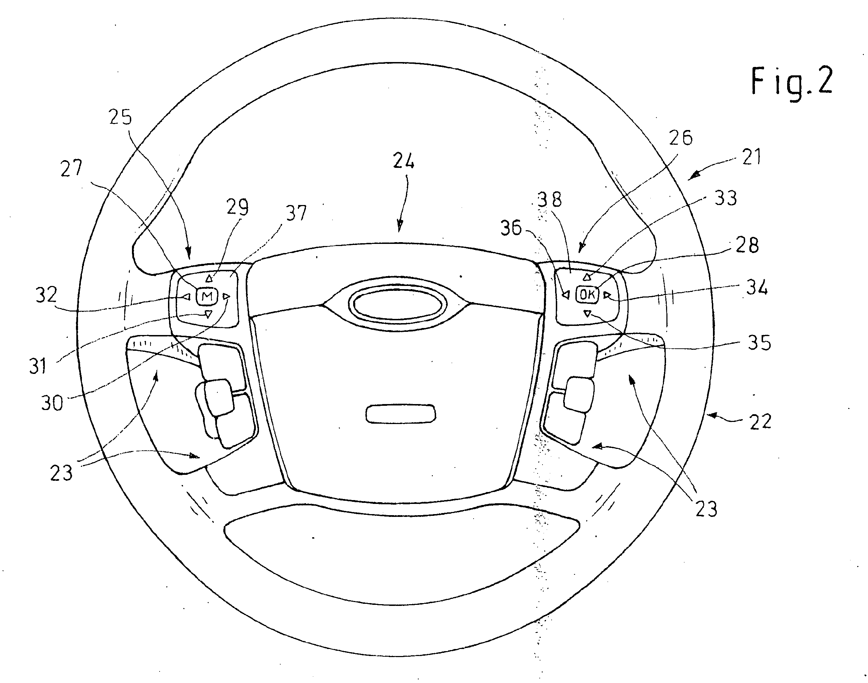

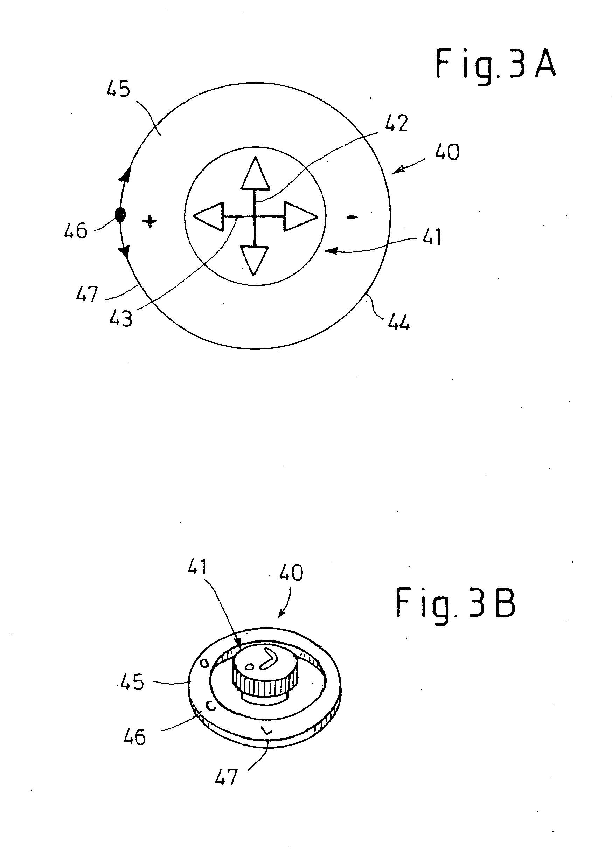

Die oben beschriebene Auswahl der jeweiligen Luftkissen zu deren Verstellung und deren Verstellung erfolgt mit den nachfolgend zunächst strukturell mit Bezug zu den Figuren 2 und 3 beschriebenen 4-Wegeschaltern.

In Figur 2 ist ein Lenkrad 21 eines Personenkraftwagens in einer Draufsicht dargestellt, daß einen kreisförmigen Lenkkranz 22 aufweist, der über vier Speichen 23 mit einem Mittelteil 24 verbunden ist. Über das Mittelteil 24 wird üblicherweise das Lenkrad 21 mit der Lenksäule verbunden und es beherbergt meist einen Airbag.

Üblicherweise wird der Lenkkranz 22 von den Fingern umgriffen, wobei der Handballen so auf dem Lenkkranz 22 ruht, daß die Daumen in etwa auf den oberen Speichen 23 ruhen und zwar im Bereich des Übergangs der Speichen 23 zum Mittelteil 24.

An der jeweiligen oberen linken und rechten Speiche 23 ist jeweils eine 4-Wegeschalteranordnung 25, 26 vorgesehen, die spiegelbildlich zu einender angeordnet sind. Jede Schalteranordnung umfaßt ein zentrales Schaltelement 27 bzw. 28, das über eine entsprechende, in der Figur sichtbare Taste betätigbar ist.

Kreuzförmig um dieses zentrale Schaltelement 7 bzw. 8 sind jeweils vier weitere Schaltelemente 29, 30, 31, 32 bzw. 33, 34, 35, 36 angeordnet, die über eine gemeinsame sichtbare Wipptaste 37, 38 separat betätigbar sind, die das zentrale Schaltelement 27, 28 bzw. deren Taste ringförmig umgibt.

Nach folgend wird zur Vereinfachung Bezug genommen auf die Schaltelemente selbst, wobei klar ist, daß in Figur 2 lediglich deren Betätigungstasten sichtbar sind.

Die jeweils gegenüberliegenden Schaltelemente 29,31 und 30,32 bzw. 33,35 und 34,36 bilden jeweils ein einer vertikalen bzw. horizontalen Richtung zugeordnetes Paar mit entgegen gesetzter Funktion, wie später beschrieben werden wird. Ihre Tasten sind zudem mit entsprechenden Pfeilen markiert.

Alle Schaltelemente sind Druckschalter und derart ausgeführt, daß sie separat von einander betätigbar sind. Ferner weisen ihre Tasten Noppen auf, die ein Auffinden ihres Druckpunktes ohne visuelle Rückkopplung ermöglichen.

Alle Schaltelemente werden von einem nicht dargestellten Mikroprozessor überwacht, so daß ihre Betätigungsdauer feststellbar ist und in Abhängigkeit davon unterschiedliche Funktionen pro Schaltelement ausführbar sind. Zudem erlaubt der Mikroprozessor eine Programmierung bzw. Änderung der Funktion des jeweiligen Schaltelements, ggf. auch kontextabhängig.

In den Fig. 3A und 3B ist ein alternativer 4-Wegeschalter 40 dargestellt, der z. B. an geeigneter Stelle an der Tür oder Mittelkonsole usw. angeordnet werden kann.

Der Schalter 40 umfaßt einen Joystick-artigen Griffel 41, der entsprechend des Schemas in Fig. 3A in senkrecht zu einander liegenden Richtungen 42, 43 neigbar ist, wie durch dort die Pfeile angedeutet ist. Des Weiteren ist der Griffel 41 um eine senkrecht auf diese Richtungen stehende Achse drehbar, wie durch den Pfeil 44 angedeutet ist. Dabei kann der Griffel 41 in drei Stellungen 45, 46 und 47 gedreht werden, in denen er einrastet.

In der Stellung 45 ist der Schalter 40 ausgestellt.

In der Stellung 46 dient der Schalter 40 zur Auswahl und Einstellung entsprechender Formänderungselemente, z. B. 13 bis 17 des Sitzes 1 aus Fig. 1. Eine Bewegung des Griffels 41 in Richtung 42 bedingt dabei ein zyklisches Durchlaufen der einzelnen Formänderungselemente 13 bis 17 (vgl. unten) und eine Bewegung des Griffels 41 in Richtung 43 eine Verstellung des momentan ausgewählten Formänderungselements. Dies ist durch das "+" und "-" Zeichen in Fig. 3A angedeutet.

In der Stellung 47 dient der Schalter 40 zum Anschalten einer Lordosenstützenmassagefunktion, die vom System vorgeben ist und ggf. einstellbar ausgestaltet ist.

Weitere Drehstellungen des Griffels 41 sind denkbar, etwa zum An- und Ausschalten der oben beschriebenen zyklischen Bewegung der Sitzfläche des Sitzes 1 über die vier Luftkissen 13.

Zusätzlich kann der Griffel 41 entlang der Drehachse 44 gedrückt werden, um eine gewählte Einstellung abzuspeichern.

Nachfolgend wird mit Bezug zu Fig. 4 das Verfahren zur Auswahl, Verstellung und Anzeige sitzbezogener Funktionen, vorliegend die Verstellung der Formänderungselemente in Form der Luftkissen 13 bis 17, beschrieben werden.

In dem vorliegenden Beispiel dient die rechte 4-Wegeschalteranordnung 26 aus Fig. 2 zur Steuerung/ Betätigung eines hierarchischen Menüs zur Auswahl und Verstellung von sitzbezogenen Funktionen, das auf einer Anzeige 50 einer sonst nicht weiter dargestellten Vorrichtung zur Anzeige und Steuerung von kraftfahrzeugbezogenen Funktionen dargestellt wird.

Die Anzeige 50 ist aus ergonomischen Gründen im Blickfeld des Fahrers, bevorzugt gut sichtbar zentral im Armaturenbrett 51 zwischen der Geschwindigkeits- und Drehzahlanzeige angeordnet. Somit wird der Fahrer möglichst wenig vom Fahrgeschehen abgelenkt und muß keine größeren Augenbewegungen oder Kopfdrehungen vollführen.

Die Anzeige kann z. B. Teil eines übliches Navigations-/Bordcomputersystems sein, das neben der Navigation über GPS usw. auch Verbrauchswerte, Reichweite, Außentemperatur, momentaner Verbrauch, Uhrzeit usw. anzeigt und die Steuerung/Einstellung weiterer Funktionen des Fahrzeugs erlaubt.

Das System zur Anzeige, Auswahl und Verstellung von sitzbezogenen Funktionen wird über das hierarchische Menü 52 gesteuert. Das Menü umfaßt dazu ein Basismenü I und mehrere Menüebenen II, III, IV mit jeweils mehreren übereinander listenartig dargestellten Menüpunkten II.1, II.2, II.3 ...; III.1, III.2, III.3 ..., IV.1, IV.2, IV.3 usw.

Die Menüebene IV enthält vorliegend eine zyklische zu durchlaufende Liste aller zu verstellenden Formänderungselementen oder anderen sitzbezogenen Funktionen, die mit IV.1, IV.2, IV.3 usw. schematisch bezeichnet sind.

Das hierarchische Menü 52 wird mittels eines Cursors 53 gesteuert, eingestellt und betätigt, der wiederum von den Schaltelementen der Schalteranordnung 26 bewegt wird. In Fig. 4 ist der Cursor 53 als Kreuz mit Andeutung der Bewegungsrichtungen dargestellt.

Zur Cursorbewegung sind die vertikalen Schaltelemente 33, 35 der rechten Schalteranordnung 26 fest verdrahtet, d. h. einer bestimmten Funktion fest zugewiesen und zwar unabhängig von der Betätigungsdauer.

Im vorliegenden Fall ist dies das Bewegen des Cursors durch die übereinander listenartig dargestellten Menüpunkte (z. B. IV.1, IV.2, IV.3 usw.) einer Menüebene (hier IV).

Kommt der Cursor bei einer Liste oben oder unten an, so springt er nach unten bzw. oben zum letzten bzw. ersten angezeigten Menüpunkt. Er bewegt sich also intuitiv zyklisch durch die dargestellte Liste in Richtung der jeweilig betätigten Taste eines Schaltelements, hier 33, 35.

Befindet sich der Cursor 53 an der entsprechenden Listenposition eines Formänderungselements oder der anderen Funktion, können diese verstellt oder ein- und ausgeschaltet werden. Hierzu dienen die horizontalen Schaltelemente 34, 36 bzw. Tasten.

Durch eine Betätigung des Schaltelements 34 wird der Fülldruck des entsprechenden Formänderungselements erniedrigt und durch das Schaltelement 36 entsprechend erhöht. Somit wird das Formänderungselement härter oder weicher.

In entsprechender Anwendung können Funktionen ein- oder ausgeschaltet werden.

Eine Betätigung der mittleren Taste 28 bewirkt eine Abspeicherung der momentanen Einstellungen.

Insgesamt ergibt sich also folgendes Betätigungsschema:

| Funktion | Verstellung |
|---|---|
| Kopfstütze | härter / weicher |
| Lordosenstütze oben | härter / weicher |
| Lordosenstütze mitte | härter / weicher |
| Lordosenstütze unten | härter / weicher |
| Lordosenstützenmassage | An / Aus |
| Seitlicher Halt oben | härter / weicher |
| Seitlicher Halt unten | härter / weicher |
| Zyklische Bewegung der Sitzfläche | An / Aus |
| Abspeichern | Ja |
| Ein- und Ausstieg erleichtern | An / Aus |

Es versteht sich, daß eine Vielzahl von Varianten und Kombinationen innerhalb der Erfindung denkbar sind.

So ist z. B. das soeben beschriebene Verfahren der Fig. 4 selbstverständlich auch mittels des Schalters 40 aus Fig. 3 durchführbar.

Durch eine Drehung des Griffels 41 um die Achse, wie durch den Pfeil 44 angedeutet, erfolgt die Auswahl der zu verstellenden Funktionsgruppe. Im vorliegenden Fall könnte zwischen der Sitzkonturverstellung, der Lordosenstützenmassage und der zyklische Bewegung der Sitzfläche ausgewählt werden.

Eine Bewegung des Griffels 41 in Richtung 42 bedingt im Fall der Sitzkonturverstellung ein zyklisches Durchlaufen der einzelnen zu verstellenden Formänderungselemente 13 bis 17 (vgl. unten) und eine Bewegung des Griffels 41 in Richtung 43 eine Verstellung des momentan ausgewählten Formänderungselements.

In der Stellung der Lordosenstützenmassage oder der zyklischen Bewegung der Sitzfläche dient der Schalter 40 zum Anschalten.

### Insgesamt ergibt sich also folgendes Betätigungsschema:

**Sitzbezogene Funktionen in hierarchischer Ordnung**

| Griffeldrehstellung | Funktion | Verstellung |
|---|---|---|
| Sitzkontur | | |
| | Lordosenstütze oben | Fülldruck |
| | Lordosenstütze mitte | Fülldruck |
| | Lordosenstütze unten | Fülldruck |
| | Lordosenstütze oben | Fülldruck |
| | Lordosenstütze unten | Fülldruck |
| | Sitzflächentiefe | Fülldruck |
| Lordosenstützenmassage | | An |
| Zyklische Bewegung der | | An |
| Sitzfläche | | |

Zusätzlich kann der Griffel 41 entlang der Drehachse 44 gedrückt werden, um eine gewählte Einstellung abzuspeichern.

Somit wird zwischen den Funktionsgruppen durch die Drehung des Griffels 41 umgeschaltet. Die unterschiedlichen Funktionsgruppen können auf der Anzeige 50 als unterschiedliche Menüebenen dargestellt werden.

**Bezugszeichenliste**

| | | | |
|---|---|---|---|
| 1 | Sitz | 33 | Schaltelement |
| 2 | Kopfstütze | 34 | Schaltelement |
| 3 | Rückenlehne | 35 | Schaltelement |
| 4 | Sitz | 36 | Schaltelement |
| 5 | Scharnier | 37 | Wipptaste |
| 6 | Auflage | 38 | Wipptaste |
| 7 | Rippen | | |
| 8 | Rippen | 40 | 4-Wegeschalter |
| 9 | Auflage | 41 | Griffel |
| 10 | Schaumblock | 42 | Richtung |
| 11 | Rahmen | 43 | Richtung |
| 12 | Stützplatte | 44 | Drehachse |
| 13 | Luftkissen | 45 | Stellung |
| 14 | Luftkissen | 46 | Stellung |
| 15 | Luftkissen | 47 | Stellung |
| 16 | Luftkissen | | |
| 17 | Luftkissen | | |
| | | 50 | Anzeige |
| 21 | Lenkrad | 51 | Armaturenbrett |
| 22 | Lenkkranz | 52 | Menü |
| 23 | Speichen | 53 | Cursors |
| 24 | Mittelteil | | |
| 25 | 4-Wegeschalteranordnung | I, II, III, IV | Menüebene |
| 26 | 4-Wegeschalteranordnung | IV.1, IV.2, IV.3 | Menüpunkte |
| 27 | Schaltelement | | |
| 28 | Schaltelement | | |
| 29 | Schaltelement | | |
| 30 | Schaltelement | | |
| 31 | Schaltelement | | |
| 32 | Schaltelement | | |

## Patentansprüche

1. System zur Auswahl und Verstellung sitzbezogener Funktionen in einem Kraftfahrzeug, insbesondere Pkw, für einen Fahrzeugsitz mit einem Rahmen (11), einer Auflage (6, 9) und mehreren Formänderungselementen (13, 14, 15, 16, 17) zwischen Rahmen (11) und Auflage (9), wobei ein 4-Wegeschalter (26, 40) für die Auswahl und Verstellung der sitzbezogenen Funktionen, insbesondere durch Auswahl und Verstellung der Formänderungselemente (13 - 17) vorgesehen ist,
**dadurch gekennzeichnet, daß**
der 4-Wegeschalter (26) zwei im wesentlichen Senkrecht zu einander angeordnete Betätigungstastenpaare (33, 35; 34,36) aufweist, wobei der 4-Wegeschalter zusätzlich um eine senkrecht zur Ebene der Betätigungstasten stehende Achse (44) drehbar ausgestaltet ist, um eine Umschaltung zwischen verschiedenen Funktionsgruppen zur Verfügung zu stellen.

2. System nach dem Oberbegriff des Anspruchs 1,
**dadurch gekennzeichnet, daß**
der 4-Wegeschalter (40) zwei im wesentlichen Senkrecht zu einander stehende Betätigungsrichtungen (42, 43) aufweist, wobei der 4-Wegeschalter (40) zusätzlich um eine senkrecht zur Betätigungsrichtung stehende Achse (44) drehbar ausgestaltet ist, um eine Umschaltung zwischen verschiedenen Funktionsgruppen zur Verfügung zu stellen.

3. System nach einem der vorhergehenden Ansprüche, **dadurch gekennzeichnet, daß** der 4-Wegeschalter (26, 40) entlang der Drehachse als Druckschalter ausgestaltet ist.

4. System nach einem der vorherigen Ansprüche, **dadurch gekennzeichnet, daß** der 4-Wegeschalter (40) in der Tür oder dem Sitz angeordnet ist.

5. System nach einem der vorhergehenden Ansprüche, **dadurch gekennzeichnet, daß** die durch ein oder mehrere Schaltelemente (29, 31; 28, 33, 34, 35, 36) ausgeführten Funktionen mit den jeweiligen Schaltelementen fest zugeordnet sind.

6. System nach einem der vorhergehenden Ansprüche, **dadurch gekennzeichnet, daß** ein oder mehrere Schaltelemente (27, 30, 32) derart ausgeführt sind, daß die ihnen zugewiesenen Funktionen frei programmierbar sind.

7. System nach einem der vorhergehenden Ansprüche, **dadurch gekennzeichnet, daß** ein oder mehrere Schaltelemente (27, 30, 32) derart ausgeführt sind, daß die ihnen zugewiesenen Funktionen sich kontextabhängig ändern.

8. System nach einem der vorhergehenden Ansprüche, **dadurch gekennzeichnet, daß** ein Mittel (50) zur optischen und/oder akustischen Anzeige und/oder taktile Anzeige der ausgewählten Funktion und deren Verstellung vorgesehen ist.

9. System nach Anspruch 8, **dadurch gekennzeichnet, daß** das Mittel zur taktilen Anzeige eine pulsierende Änderung des entsprechenden Formänderungselements ist.

10. Verfahren zur Auswahl und Verstellung sitzbezogener Funktionen in einem Kraftfahrzeug, insbesondere Pkw, für einen Fahrzeugsitz mit einem Rahmen (11), einer Auflage (6, 9) und mehreren Formänderungselementen (13, 14, 15, 16, 17) zwischen Rahmen (11) und Auflage (9), wobei die Auswahl und Verstellung der sitzbezogenen Funktionen über einen 4-Wegeschalter (26, 40), insbesondere durch Auswahl und Verstellung der Formänderungselemente (13 - 17) erfolgt,
**dadurch gekennzeichnet, daß**
eine Umschaltung zwischen verschiedenen Funktionsgruppen über eine Drehung des 4-Wegeschalters (40) um eine senkrecht zur Ebene der Betätigungstasten oder -richtungen (42, 43) stehende Achse (44) erfolgt.

11. Verfahren nach Anspruch 10, **dadurch gekennzeichnet, daß** über eine der jeweils im wesentlichen senkrecht zueinander angeordneten Betätigungstastenpaare (33, 35; 34,36) oder Betätigungsrichtungen (42, 43) einer Auswahl der zu verstellenden Funktion erfolgt und über die entsprechend andere die Verstellung der Funktionen erfolgt.

12. Verfahren nach Anspruch 10 oder 11, **dadurch gekennzeichnet, daß** durch die Drehung des 4-Wegeschalters (40) eine Umschaltung zwischen mindestens zwei Funktionen erlaubt, die ausgewählt sind aus der Gruppe umfassend eine Sitzkonturverstellung, eine Lordosenstützenverstellung, eine Lordosenstützenmassage und eine zyklischen Bewegung des Sitzkissens.

13. Verfahren nach einem der Ansprüche 10 bis 12, **dadurch gekennzeichnet, daß** eine optische und/oder akustische und/oder taktile Anzeige (50) der ausgewählten Funktion und deren Verstellungsmöglichkeiten und/oder deren Verstellung erfolgt.

14. Verwendung eines Systems nach einem der Ansprüche 1 bis 9 zur Durchführung des Verfahrens nach einem der Ansprüche 10 bis 13.

## Claims

1. System for selecting and adjusting seat related functions in a motor vehicle, in particular a passenger car, for a vehicle seat having a frame (11), a support (6, 9) and a plurality of shape changing elements (13, 14, 15, 16, 17) between the frame (11) and support (9), a 4-way switch (26, 40) being provided for selecting and adjusting the seat related functions, in particular by selecting and adjusting the shape changing elements (13-17), **characterized in that** the 4-way switch (26) has two activation key pairs (33, 35; 34, 36) which are arranged essentially perpendicularly to one another, the 4-way switch being additionally configured so as to be rotatable about an axis (44) which is perpendicular to the plane of the activation keys in order to provide switching between various function groups.

2. System according to the preamble of Claim 1, **characterized in that** the 4-way switch (40) has two activation directions (42, 43) which are essentially perpendicular to one another, the 4-way switch (40) being additionally configured so as to be rotatable about an axis (44) which is perpendicular to the activation direction in order to provide switching between various function groups.

3. System according to one of the preceding claims, **characterized in that** the 4-way switch (26, 40) is configured along the rotational axis as a pushbutton switch.

4. System according to one of the preceding claims, **characterized in that** the 4-way switch (40) is arranged in the door or the seat.

5. System according to one of the preceding claims, **characterized in that** the functions which are carried out by one or more switching elements (29, 31; 28, 33, 34, 35, 36) are permanently assigned to the respective switching elements.

6. System according to one of the preceding claims, **characterized in that** one or more switching elements (27, 30, 32) are embodied in such a way that the functions which are allocated to them are freely programmable.

7. System according to one of the preceding claims, **characterized in that**, one or more switching elements (27, 30, 32) are embodied in such a way that the functions which are allocated to them change depending on the context.

8. System according to one of the preceding claims, **characterized in that** a visual display means (50) and/or audible indicator means and/or tactile indicator means for the selected function and its adjustment are provided.

9. System according to Claim 8, **characterized in that** the tactile indicator means is a pulsating change in the corresponding shape changing element.

10. Method for selecting and adjusting seat related functions in a motor vehicle, in particular a passenger car, for a vehicle seat having a frame (11), a support (6, 9) and a plurality of shape changing elements (13, 14, 15, 16, 17) between the frame (11) and support (9), the selection and adjustment of the seat related functions being carried out by means of a 4-way switch (26, 40), in particular by selecting and adjusting the shape changing elements (13-17), **characterized in that** switching over between various function groups is carried out by rotating the 4-way switch (40) about an axis (44) which is perpendicular to the plane of the activation keys or directions (42, 43).

11. Method according to Claim 10, **characterized in that** a selection of the function to be adjusted is carried out by means of one of the activation key pairs (33, 35; 34, 36) or activation directions (42, 43) which are each arranged essentially perpendicularly to one another, and the adjustment of the functions is carried out by means of corresponding other activation key pairs (33, 35; 34, 36) or activation directions (42, 43).

12. Method according to Claim 10 or 11, **characterized in that** rotating the 4-way switch (40) permits switching over between at least two functions which are selected from the group comprising a seat contour adjustment, a lumbar curve support adjustment, a lumbar curve support massage and a cyclical movement of the seat cushion.

13. Method according to one of Claims 10 to 12, **characterized in that** a visual display (50) and/or audible indication (50) and/or tactile indication (50) of the selected function and its adjustment possibilities and/or its adjustment are carried out.

14. Use of a system according to one of Claims 1 to 9 for carrying out the method according to one of Claims 10 to 13.

## Revendications

1. Système destiné à la sélection et au réglage de fonctions relatives au siège dans un véhicule automobile, notamment un véhicule de tourisme, pour un siège de véhicule avec un cadre (11), un coussin (6, 9) et plusieurs éléments de modification de forme (13, 14, 15, 16, 17) disposés entre le cadre (11) et le coussin (9), un contacteur à 4 voies (26, 40) étant prévu pour la sélection et le réglage des fonctions relatives au siège, notamment par sélection et réglage des éléments de modification de forme (13 - 17), **caractérisé en ce que** le contacteur à 4 voies (26) comporte deux paires de touches d'actionnement (33, 35 ; 34, 36) disposées pour l'essentiel perpendiculairement l'une par rapport à l'autre, le contacteur à 4 voies étant en outre réalisé de façon à pouvoir tourner autour d'un axe (44) perpendiculaire au plan des touches d'actionnement, pour permettre une commutation entre différents groupes de fonctions.

2. Système selon le préambule de la revendication 1, **caractérisé en ce que** le contacteur à 4 voies (40) comporte deux directions d'actionnement (42, 43) pour l'essentiel perpendiculaires l'une par rapport à l'autre, le contacteur à 4 voies (40) étant en outre réalisé de façon à pouvoir tourner autour d'un axe (44) perpendiculaire à la direction d'actionnement, pour permettre une commutation entre différents groupes de fonctions.

3. Système selon l'une quelconque des revendications précédentes, **caractérisé en ce que** le contacteur à 4 voies (26, 40) est réalisé sous la forme d'un pressostat le long de l'axe de rotation.

4. Système selon l'une quelconque des revendications précédentes, **caractérisé en ce que** le contacteur à 4 voies (40) est disposé dans la porte ou le siège.

5. Système selon l'une quelconque des revendications précédentes, **caractérisé en ce que** les fonctions exécutées par un ou plusieurs éléments de commutation (29, 31 ; 28, 33, 34, 35, 36) sont associées fixement aux éléments de commutation respectifs.

6. Système selon l'une quelconque des revendications précédentes, **caractérisé en ce qu'**un ou plusieurs éléments de commutation (27, 30, 32) sont réalisés de telle sorte que les fonctions affichées sont librement programmables.

7. Système selon l'une quelconque des revendications précédentes, **caractérisé en ce qu'**un ou plusieurs éléments de commutation (27, 30, 32) sont réalisés de telle sorte que les fonctions affichées changent en fonction du contexte.

8. Système selon l'une quelconque des revendications précédentes, **caractérisé en ce qu'**un moyen (50) d'indication optique et/ou acoustique et/ou tactile de la fonction sélectionnée et de son réglage est prévu.

9. Système selon la revendication 8, **caractérisé en ce que** le moyen d'indication tactile est une modification par pulsion des éléments de modification de forme correspondants.

10. Procédé destiné à la sélection et au réglage des fonctions relatives au siège dans un véhicule automobile, notamment un véhicule de tourisme, pour un siège de véhicule avec un cadre (11), un coussin (6, 9) et plusieurs éléments de modification de forme (13, 14, 15, 16, 17) positionnés entre le cadre (11) et le coussin (9), la sélection et le réglage des fonctions relatives au siège se produisant par l'intermédiaire d'un contacteur à 4 voies (26, 40), notamment par la sélection et le réglage des éléments de modification de forme (13 - 17), **caractérisé en ce qu'**une commutation entre différents groupes de fonctions se produit par pivotement d'un contacteur à 4 voies (40) autour d'un axe (44) perpendiculaire au plan des touches ou directions d'actionnement (42, 43).

11. Procédé selon la revendication 10, **caractérisé en ce qu'**une sélection de la fonction à régler se produit par l'intermédiaire d'une des paires de touches d'actionnement (33, 35 ; 34, 36) ou directions d'actionnement (42, 43) disposées respectivement pour l'essentiel perpendiculairement l'une par rapport à l'autre et que le réglage des fonctions se produit via l'autre paire.

12. Procédé selon la revendication 10 ou 11, **caractérisé en ce que** le pivotement du contacteur à 4 voies (40) permet une commutation entre au moins deux fonctions sélectionnées parmi le groupe comprenant un réglage de contour de siège, un réglage anti-lordose, un massage anti-lordose et un mouvement cyclique du coussin de siège.

13. Procédé selon l'une quelconque des revendications 10 à 12, **caractérisé en ce qu'**une indication optique et/ou acoustique et/ou tactile (50) de la fonction sélectionnée et de ses possibilités de réglage et/ou de son réglage se produit.

14. Utilisation d'un système selon l'une quelconque des revendications 1 à 9 destiné à mettre en oeuvre le procédé selon l'une quelconque des revendications 10 à 13.
